# EUROPEAN PATENT APPLICATION

(11) **EP 4 224 899 A1**
(43) Date of publication of application: **09.08.2023**
(21) Application number: 21874387.0
(22) Date of filing: 26.09.2021
(51) Int. Cl.: H04W 8/02

(54) **TRANSMISSION PROCESSING METHOD, TERMINAL AND NETWORK SIDE DEVICE**

(30) Priority: 29.09.2020 CN 202011053372
(71) Applicant: Vivo Mobile Communication Co., Ltd., Dongguan, Guangdong 523863 (CN)
(72) Inventor: WU, Yumin, Dongguan, Guangdong 523863 (CN)
(74) Representative: Murgitroyd & Company
(86) International application number: PCT/CN2021/120658
(87) International publication number: WO 2022/068727

(57) **Abstract**

This application discloses a transmission processing method, a terminal, and a network side device, and relates to the field of communication technologies. The method includes: receiving first configuration information transmitted by a network side device, where the first configuration information is used for configuring a working area for signal transmission, and the working area is used for performing some functions of a cell; and performing signal transmission in the working area according to the first configuration information.

## Description

### CROSS-REFERENCE TO RELATED APPLICATION

This application claims priority to Chinese Patent Application No. 202011053372.2, filed in China on September 29, 2020, which is incorporated herein by reference in its entirety.

### TECHNICAL FIELD

This application relates to the field of communication technologies, and in particular, to a transmission processing method, a terminal, and a network side device.

### BACKGROUND

Currently, to ensure communication quality, a quantity of deployed base stations has greatly increased, and the base stations are deployed more intensive. With the deployment of base stations, a quantity of cells has also increased significantly.

In this case, a terminal, when moving between cells, frequently performs some functions of the cells, resulting in greatly increased power consumption of the terminal. For example, during moving of user equipment (User Equipment, UE) in an idle or inactive state, a network provides priorities of frequency points. In a case that there is a large quantity of cells, the UE needs to perform frequent cell selection and re-selection, cell measurement, and the like, resulting in a large amount of power consumption.

### SUMMARY

Embodiments of this application are intended to provide a transmission processing method, a terminal, and a network side device, which can resolve a problem of excessively large power consumption caused by a terminal moving between cells.

To resolve the foregoing technical problems, this application is implemented as follows:

According to a first aspect, an embodiment of this application provides a transmission processing method, applied to a terminal The method includes:
receiving first configuration information transmitted by a network side device, where the first configuration information is used for configuring a working area for signal transmission, and the working area is used for performing some functions of a cell; and
performing signal transmission in the working area according to the first configuration information.

According to a second aspect, an embodiment of this application provides a transmission processing method, applied to a network side device, and including:
transmitting first configuration information, where the first configuration information is used for configuring a working area for signal transmission, and the working area is used for performing some functions of a cell; and
performing signal transmission in the working area according to the first configuration information.

According to a third aspect, an embodiment of this application further provides a transmission processing apparatus, including:
a receiving module, configured to receive first configuration information transmitted by a network side device, where the first configuration information is used for configuring a working area for signal transmission, and the working area is used for performing some functions of a cell; and
a first signal transmission module, configured to perform signal transmission in the working area according to the first configuration information.

According to a fourth aspect, an embodiment of this application further provides a transmission processing apparatus, including:
a transmitting module, configured to transmit first configuration information, where the first configuration information is used for configuring a working area for signal transmission, and the working area is used for performing some functions of a cell; and
a second signal transmission module, configured to perform signal transmission in the working area according to the first configuration information.

According to a fifth aspect, an embodiment of this application further provides a communication device, including a processor, a memory, and a program or an instruction stored in the memory and executable on the processor, the program or the instruction, when executed by the processor, implementing the method according to the first aspect, or implementing steps of the method according to the second aspect.

According to a sixth aspect, an embodiment of this application further provides a readable storage medium, storing a program or an instruction, the program or the instruction, when executed by a processor, implementing the method according to the first aspect, or implementing steps of the method according to the second aspect.

According to a seventh aspect, an embodiment of this application provides a chip, including a processor and a communication interface, where the communication interface is coupled to the processor, and the processor is configured to run a program or an instruction to implement the method according to the first aspect, or implement the method according to the second aspect.

According to an eighth aspect, an embodiment of this application provides a program product, stored in a non-volatile storage medium, where the program product is executed by at least one processor to implement the method according to the first aspect or steps of the method according to the second aspect.

In this way, in the embodiments of this application, after receiving the first configuration information transmitted by the network side device, the terminal performs signal transmission in the working area according to the first configuration information. The first configuration information is used for configuring the working area for signal transmission, and the working area is used for performing some functions of the cell. Therefore, even if the terminal moves between cells, some functions of the cell may no longer be performed in the working area due to configuration of the working area, thereby achieving the purpose of reducing power consumption.

### BRIEF DESCRIPTION OF THE DRAWINGS

FIG. 1 is a block diagram of a wireless communication system;
FIG. 2 is a schematic flowchart of a transmission processing method applied to a terminal according to an embodiment of this application;
FIG. 3 is a schematic flowchart of a transmission processing method applied to a network side device according to an embodiment of this application;
FIG. 4 is a schematic structural diagram of an apparatus corresponding to the method shown in FIG. 2;
FIG. 5 is a schematic structural diagram of an apparatus corresponding to the method shown in FIG. 3;
FIG. 6 is a schematic structural diagram of a communication device according to an embodiment of this application;
FIG. 7 is a schematic structural diagram of a terminal according to an embodiment of this application; and
FIG. 8 is a schematic structural diagram of a network side device according to an embodiment of this application.

### DETAILED DESCRIPTION

The following clearly and completely describes the technical solutions in the embodiments of this application with reference to the accompanying drawings in the embodiments of this application. Apparently, the described embodiments are some rather than all of the embodiments of this application. All other embodiments obtained by a person of ordinary skill in the art based on the embodiments of this application without creative efforts shall fall within the protection scope of this application.

In the specification and claims of this application, the terms such as "first" and "second" are used to distinguish similar objects, but are not used to describe a specific sequence or order. It is to be understood that the data termed in such a way are interchangeable in appropriate circumstances, so that the embodiments of this application can be implemented in orders other than the order illustrated or described herein. In addition, "and/or" used in this specification and the claims represents at least one of the connected objects, and the character "/"generally represents an "or" relationship between the associated objects.

It is worth noting that the technologies described in the embodiments of this application are not limited to a long term evolution (Long Term Evolution, LTE)/an LTE-Advanced (LTE-Advanced, LTE-A) system, and may further be applied to other wireless communication systems such as a code division multiple access (Code Division Multiple Access, CDM) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, and other systems. In the embodiments of this application, the terms "system" and "network" may usually be used interchangeably, and the described technologies may be applied to the systems and radio technologies mentioned above, and may also be applied to other systems and radio technologies. However, in the following description, a new radio (New Radio, NR) system is described for an illustrative purpose, and the term NR is used in most of the following description, although these technologies may also be applied to applications other than an NR system application, such as a 6th generation (6th Generation, 6G) communication system.

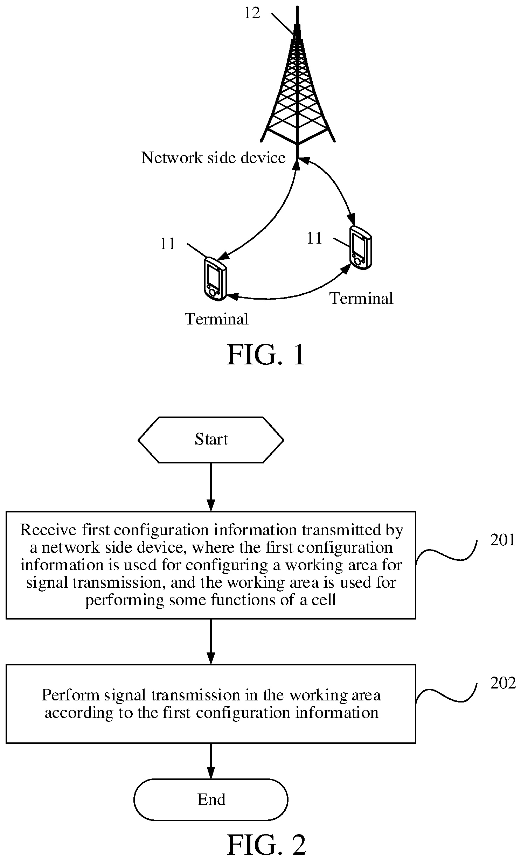

FIG. 1 is a block diagram of a wireless communication system to which an embodiment of this application may be applicable. The wireless communication system includes a terminal 11 and a network side device 12. The terminal 11 may also be referred to as a terminal device or user equipment (User Equipment, UE). The terminal 11 may be a mobile phone, a tablet personal computer (Tablet Personal Computer), or a laptop computer (Laptop Computer), or may be referred to as a notebook computer, a personal digital assistant (Personal Digital Assistant, PDA), a handheld computer, a netbook, an ultra-mobile personal computer (Ultra-Mobile Personal Computer, UMPC), a mobile Internet device (Mobile Internet Device, MID), or a wearable device (Wearable Device), or may be referred to as a terminal side device such as vehicle user equipment (VUE) or pedestrian user equipment (PUE), where the wearable device includes a bracelet, an earphone, a pair of glasses, and the like. It should be noted that the specific type of the terminal 11 is not limited in the embodiments of this application. The network side device 12 may be a base station or a core network, where the base station may be referred to as a node B, an evolved node B, an access point, a base transceiver station (Base Transceiver Station, BTS), a radio base station, a radio transceiver, a basic service set (basic Service Set, BSS), an extended service set (Extended Service Set, ESS), a home node B, a home evolved node B, a WLAN access point, a WiFi node, a transmitting receiving point (Transmitting Receiving Point, TRP), or another appropriate term in the art. As long as the same technical effect is achieved, the base station is not limited to be a specific technical word. It should be noted that in the embodiments of this application, only a base station in the NR system is used as an example, but the specific type of the base station is not limited.

The transmission processing method provided in the embodiments of this application is described in detail below with reference to the accompanying drawings and by using specific embodiments and application scenarios thereof.

The method in the embodiments of this application is applied to a terminal. The terminal may be user equipment (user equipment, UE), and specifically refers to an access terminal, a user unit, a user station, a mobile station, a mobile console, a remote station, a remote terminal, a mobile device, a user terminal, a wireless communication device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, vehicle user equipment, or a wearable device.

As shown in FIG. 2, an embodiment of this application provides a transmission processing method. The method is applied to a terminal and includes the following steps:
Step 201. Receive first configuration information transmitted by a network side device, where the first configuration information is used for configuring a working area for signal transmission, and the working area is used for performing some functions of a cell.

Herein, the network side device transmits, to a terminal, configuration of the working area for signal transmission, that is, the first configuration information, and the working area is a working area used for performing some functions of the cell. In this step, the terminal learns the working area in which the terminal performs signal transmission by receiving the first configuration information transmitted by the network side device, so as to perform the next step.

Step 202. Perform signal transmission in the working area according to the first configuration information.

In this step, the terminal performs signal transmission in the working area according to the first configuration information received in step 201.

In this way, according to step 201 and step 202, after receiving the first configuration information transmitted by the network side device, the terminal can perform signal transmission in the working area according to the first configuration information. The first configuration information is used for configuring the working area for signal transmission, and the working area is used for performing some functions of the cell. Therefore, even if the terminal moves between cells, some functions of the cell may no longer be performed in the working area due to configuration of the working area, thereby achieving the purpose of reducing power consumption.

Optionally, the first configuration information includes at least one of the following:
second configuration information, where the second configuration information is used for configuring an uplink signal of the working area;
third configuration information, where the third configuration information is used for configuring a downlink signal of the working area;
an identifier of the working area; or
frequency point information of the working area.

Herein, the identifier of the working area may be a cell identifier, a RAN notification area (RAN Notification Area, RNA) identifier, or the like. The first configuration information may include identifiers of a plurality of working areas, to inform the terminal of working areas corresponding thereto. The first configuration information may inform the terminal of frequency points supported by the working areas corresponding thereto through the frequency point information of the working area. Specifically, the frequency point information may be a frequency point value or a frequency point identifier.

In addition, the second configuration information in the first configuration information is configuration for the uplink signal transmitted in the working area. Optionally, the second configuration information includes at least one of the following:
a type of the uplink signal;
frequency point information of the uplink signal;
time domain position information of the uplink signal;
a subcarrier spacing of the uplink signal;
a target downlink signal associated with the uplink signal; or
indication information of the uplink signal, where the indication information is used for indicating an information item carried by the uplink signal.

Herein, the type of the uplink signal includes at least one of a channel sounding reference signal (Sounding Reference Signal, SRS), a physical random access channel (Physical Random Access Channel, PRACH) signal, or a physical uplink shared channel (Physical Uplink Shared Channel, PUSCH) signal. The frequency point information of the uplink signal may be a specific frequency point value such as fl, or may be a frequency point identifier such as a frequency point 1. The time domain position information of the uplink signal may be indicated by a bitmap (bitmap). The subcarrier spacing of the uplink signal may be 15 KHz, 30 KHz, or the like. The indication information of the uplink signal may indicate that the information item is a terminal identifier, that is, the uplink signal transmitted by the terminal in the working area needs to carry the terminal identifier of the terminal. The indication information of the uplink signal may also indicate that the information item is a working area identifier, that is, the uplink signal transmitted by the terminal in the working area needs to carry the working area identifier of the working area.

In this way, through the second configuration information and the type of the uplink signal in the second configuration information, it may at least be learned that which uplink signals can be transmitted in the working area; through the frequency point information, the time domain position information, and the subcarrier spacing of the uplink signal in the second configuration information, it is learned that how to transmit the uplink signal in the working area; through the target downlink signal associated with the uplink signal in the second configuration information, it is learned that the target downlink signal is received in the working area; and through the indication information of the uplink signal in the second configuration information, it is learned that which information item the uplink signal transmitted in the working area needs to carry.

For example, the second configuration information transmitted by the network side device to the terminal includes configuration of a plurality of uplink signals (including uplink signals A, B, and C), and in a case that the second configuration information is further configured with a target downlink signal associated with the uplink signal A, that is, a synchronization signal block 1 (SSB-1), the terminal needs to receive the SSB-1 in the working area. The second configuration information is configured with the SSB-1 associated with the uplink signal A. Specifically, the second configuration information may be configured with a downlink resource associated with the uplink signal A, so that the terminal can receive the SSB-1 on the downlink resource associated with the uplink signal A.

In a case that the second configuration information is configured with the target downlink signal associated with the uplink signal, the target downlink signal may alternatively be received through detection, and the uplink signal is enabled to be transmitted based on uplink signal transmission configuration corresponding to the target downlink signal.

Certainly, the configuration for the uplink signal by the second configuration information is not limited to the foregoing content, and may further include an identifier of the uplink signal and the like. Details are not described herein again.

Optionally, in this embodiment, based on the second configuration information, step 202 includes:
transmitting the uplink signal in the working area according to the second configuration information.

That is, the uplink signal is transmitted in the working area based on specific content of the second configuration information. In a case that the second configuration information does not include a certain piece of configuration information required for transmitting the uplink signal, the uplink signal may be transmitted with reference to an agreement in a protocol.

Optionally, the transmitting the uplink signal in the working area according to the second configuration information includes at least one of the following:
transmitting the uplink signal carrying a terminal identifier and/or a working area identifier in a case that the second configuration information includes the indication information of the uplink signal;
transmitting the uplink signal according to the detected target downlink signal and based on uplink signal transmission configuration corresponding to the target downlink signal in a case that the second configuration information includes the target downlink signal associated with the uplink signal;
transmitting the uplink signal based on a target uplink timing advance, where the target uplink timing advance is configured, pre-configured, or pre-defined by a network side, or is determined according to a path loss of downlink measurement; or
transmitting the uplink signal through a source working area in a case that the working area changes.

The target uplink timing advance UTA may be configured, pre-configured, or pre-defined as 0 by the network side.

In a case that the uplink signal is transmitted according to the target uplink timing advance, a time domain position of the target downlink signal associated with the uplink signal is related to the target uplink timing advance. Optionally, the time domain position of the target downlink signal is a time domain position corresponding to the target uplink timing advance.

That is, a downlink time position corresponding to the uplink timing advance according to which the uplink signal is transmitted is a time position of the "configured target downlink signal associated with the uplink signal", for example, a slot (slot) boundary of the downlink signal corresponding to the uplink signal.

In a case that the working area changes, for example, changing from a working area -1 to a working area -2, the uplink signal may be transmitted through the working area -1 (that is, the source working area). Certainly, the uplink signal may be transmitted through the working area -2 (a target working area).

In this embodiment, optionally, the transmitting the uplink signal in the working area according to the second configuration information includes:
transmitting the uplink signal in the working area according to the second configuration information in a case that it is detected that a target event occurs, where
the target event includes at least one of the following:
   the second configuration information having been received;
   the terminal working in the working area;
   transmitted indication information having been received;
   a measurement result of a target signal meeting a preset condition;
   the working area changing; or
   a working mode changing.

In this way, after receiving the second configuration information transmitted by the network side device, the terminal completes transmission of the uplink signal by monitoring occurrence of the target event.

That the terminal works in the working area may be understood as that a cell on which the terminal camps belongs to the working area configured by the network side device for the terminal.

The transmitted indication information may be configured, pre-configured, or pre-defined by the network side. In a case that a paging message is used as the transmitted indication information, the terminal transmits the uplink signal in a case that the paging message is received.

The target signal may be configured, pre-configured, or pre-defined by the network side. The preset condition corresponding to the measurement result of the target signal may be an upper limit threshold or a lower limit threshold. The terminal transmits the uplink signal in a case that the measurement result of the target signal is greater than or equal to a first threshold (that is, in a case that the preset condition includes the lower limit threshold). For example, the uplink signal is transmitted in a case that the terminal triggers a change in the region and a measurement result of a reference signal (that is, the target signal) in a target region is greater than or equal to the first threshold. The terminal transmits the uplink signal in a case that the measurement result of the target signal is less than or equal to a second threshold (that is, the preset condition includes the upper limit threshold). For example, the uplink signal is transmitted in a case that a measurement result of a reference signal (that is, the target signal) in a region currently severed by the terminal is less than or equal to the second threshold.

The uplink signal is transmitted in a case that the working area changes, that is, in a case that the terminal changes from a working area to another working area, for example, the terminal changes from the working area -1 to the working area -2.

A change in the working mode may occur within the working area or between the working areas. For example, the working area -1 does not support an initial access process, but the working area -2 supports the initial access process. Therefore, the terminal changes from the working area -1 to the working area -2, and the working mode changes. In this case, the uplink signal is transmitted.

Optionally, a type of the measurement result includes at least one of the following:
reference signal received power;
reference signal received quality;
a signal to interference and noise ratio;
a received signal strength indicator;
a channel occupancy rate; or
a channel occupancy time.

In this case, for the target signal, by measuring at least one of the reference signal received power (Reference Signal Received Power, RSRP), the reference signal received quality (Reference Signal Received Quality, RSRQ), the signal to interference and noise ratio (Signal to Interference and Noise Ratio, SINR), the received signal strength indicator (Received Signal Strength Indicator, RSSI), the channel occupancy rate (Channel Occupancy Rate, COT), or the channel occupancy time (Channel Occupancy Time, COR), it is determined whether to transmit the uplink signal or not according to the measurement result in combination with the preset condition.

In addition, in this embodiment, the third configuration information in the first configuration information is configuration for the downlink signal received in the working area. Optionally, the third configuration information includes at least one of the following:
a type of the downlink signal;
an identifier of the downlink signal;
frequency point information of the downlink signal;
time domain position information of the downlink signal;
a subcarrier spacing of the downlink signal;
a target uplink signal associated with the downlink signal; or
indication information of the downlink signal, where the indication information is used for indicating an information item carried by the downlink signal.

Herein, the type of the downlink signal includes at least one of a synchronization signal and PBCH block (Synchronization Signal and PBCH block, SSB) or a channel state information reference signal (Channel State Information Reference Signal, CSI-RS). The identifier of the downlink signal indicates a specific downlink signal such as an SSB-1. The frequency point information of the downlink signal may be a specific frequency point value such as fl, or may be a frequency point identifier such as a frequency point 1. The time domain position information of the downlink signal may be indicated by a bitmap (bitmap). The subcarrier spacing of the downlink signal may be 15 KHz, 30 KHz, or the like. The indication information of the downlink signal may indicate that the information item is a terminal identifier, that is, the terminal receives a downlink signal carrying the terminal identifier of the terminal in the working area, and may also indicate that the information item is a working area identifier, that is, the terminal receives a downlink signal carrying the working area identifier of the working area in the working area.

In this way, through the third configuration information, and the type and identifier of the downlink signal in the third configuration information, it may at least be learned that which downlink signals can be received in the working area; through the frequency point information, the time domain position information, and the subcarrier spacing of the downlink signal in the third configuration information, it is learned that how to receive the downlink signal in the working area; through the target uplink signal associated with the downlink signal in the third configuration information, it is learned that the target uplink signal is transmitted in the working area; and through the indication information of the downlink signal in the third configuration information, it is learned that which information item the downlink signal received in the working area carries.

For example, the third configuration information transmitted by the network side device to the terminal is configured with a plurality of downlink signals (including the SSB-1 and the CSI-RS), and a target uplink signal associated with the SSB-1 is an uplink signal D. In this case, the terminal needs to transmit the uplink signal D in the working area. The third configuration information is configured with the uplink signal D associated with the SSB-1. Specifically, the third configuration information may be configured with an uplink resource associated with the SSB-1, so that the terminal can transmit the uplink signal D on the uplink resource associated with the SSB-1.

Certainly, the configuration for the downlink signal by the third configuration information is not limited to the foregoing content, and details are not described herein again.

Optionally, in this embodiment, based on the third configuration information, step 202 includes:
receiving the downlink signal in the working area according to the third configuration information.

That is, the downlink signal is received in the working area based on specific content of the third configuration information, for example, a paging (paging) message is received in the working area. In a case that the third configuration information does not include a certain piece of configuration information required for receiving the downlink signal, the downlink signal may be received with reference to an agreement in a protocol.

Optionally, the receiving the downlink signal in the working area according to the third configuration information includes at least one of the following:
receiving the downlink signal in a working area in which the target uplink signal is transmitted in a case that the third configuration information includes the target uplink signal associated with the downlink signal; or
receiving the downlink signal on a target resource according to the third configuration information, where the target resource is a transmission resource of the downlink signal.

The target resource may be configured by the third configuration information, or may be determined according to a correspondence between the target resource and a transmission resource of the uplink signal.

Optionally, the downlink signal includes at least a paging message.

In this way, the terminal receives specific downlink information in the working area corresponding to the transmitted uplink signal and/or on the resource corresponding to the downlink signal. For example, the terminal transmits a preamble-1 (Preamble-1), that is, the uplink signal, in a cell 1. The cell 1 belongs to a configured working area, and the preamble-1 is associated with a beam SSB-1. In this case, the terminal receives the paging message, that is, the downlink signal, through the beam SSB-1 (that is, the target resource) of the cell 1.

Correspondingly, in a case that the network side device needs to transmit the downlink signal such as the paging message to the terminal, the network side device may transmit the paging message in the working area corresponding to the uplink signal and/or on the resource corresponding to the downlink signal according to the uplink signal transmitted by the terminal. For example, the terminal transmits the preamble-1, that is, the uplink signal, in the cell 1. The cell 1 belongs to the configured working area, and the preamble-1 is associated with the beam SSB-1. In this case, the network side device transmits the paging message, that is, the downlink signal, through the beam SSB-1 (that is, the target resource) of the cell 1 after having detected the preamble-1.

According to the foregoing content, the working area is used for performing some functions of the cell. In this embodiment, optionally, that the working area performs some functions of the cell includes at least one of the following:
receiving a paging message;
performing selection or re-selection between working areas;
camping on the working area; or
measuring the working area.

Camping on the working area may be that the terminal only camps on a cell configured in the working area. Measuring the working area may be that the terminal only measures the cell or a frequency point configured in the working area.

However, for selection or re-selection performed between working areas, the terminal no longer performs selection or re-selection in all or some cells in the same working area.

Certainly, the working area may further be used for performing functions such as positioning of the working area.

Optionally, the method further includes:
stopping downlink measurement in the working area according to the first configuration information.

In this case, the terminal does not perform downlink measurement in the working area configured by using the first configuration information. Further, that the downlink measurement is not performed may be understood as measurement without performing cell selection or re-selection.

According to the method in this embodiment of this application, it can be achieved that the terminal transmits the uplink and downlink signals in the working area configured by the network side device for the terminal, that is, the network side device configures a specific uplink and downlink signal transmission region for the terminal. The terminal may be triggered to transmit the uplink signal by detecting whether the target event occurs, and the uplink signal may be transmitted by using a specific resource. The specific resource may be configured by the network side device, or may be determined according to an association between the uplink signal and the downlink signal. In a case that the network side device transmits specific information (that is, the downlink signal) on a downlink resource associated with the uplink signal, downlink resources for information transmission are saved. Correspondingly, the terminal receives the specific information on the downlink resource associated with the uplink signal.

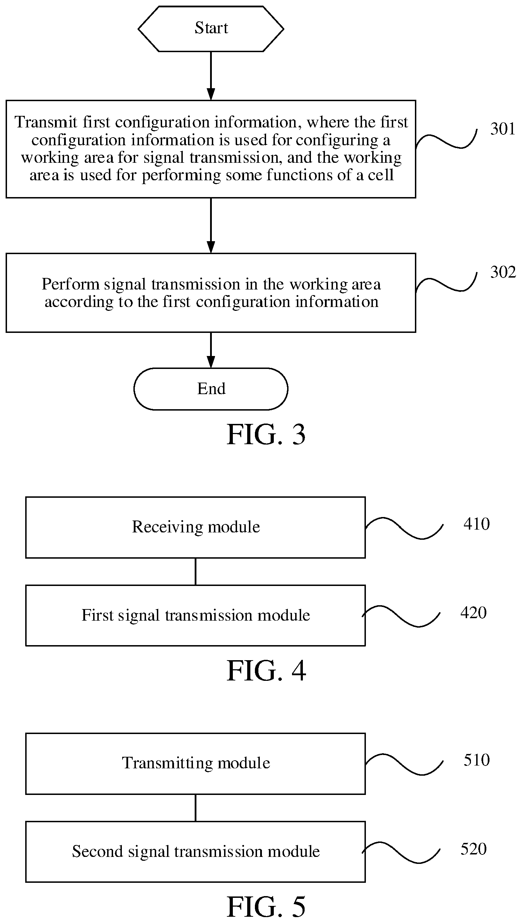

As shown in FIG. 3, an embodiment of this application provides a transmission processing method. The method is applied to a network side device and includes the following steps:
Step 301. Transmit first configuration information, where the first configuration information is used for configuring a working area for signal transmission, and the working area is used for performing some functions of a cell; and
Step 302. Perform signal transmission in the working area according to the first configuration information.

According to step 301, the network side device transmits the first configuration information, so that the terminal can perform signal transmission in the working area according to the first configuration information after receiving the first configuration information. The first configuration information is used for configuring the working area for signal transmission, and the working area is used for performing some functions of the cell. Therefore, even if the terminal moves between cells, some functions of the cell may no longer be performed in the working area due to configuration of the working area, thereby achieving the purpose of reducing power consumption. According to step 302, the network side device can also perform signal transmission in the working area according to the first configuration information in cooperation with the terminal.

Optionally, the first configuration information includes at least one of the following:
second configuration information, where the second configuration information is used for configuring an uplink signal of the working area;
third configuration information, where the third configuration information is used for configuring a downlink signal of the working area;
an identifier of the working area; or
frequency point information of the working area.

Optionally, the second configuration information includes at least one of the following:
a type of the uplink signal;
frequency point information of the uplink signal;
time domain position information of the uplink signal;
a subcarrier spacing of the uplink signal;
a target downlink signal associated with the uplink signal; or
indication information of the uplink signal, where the indication information is used for indicating an information item carried by the uplink signal.

Optionally, the third configuration information includes at least one of the following:
a type of the downlink signal;
an identifier of the downlink signal;
frequency point information of the downlink signal;
time domain position information of the downlink signal;
a subcarrier spacing of the downlink signal;
a target uplink signal associated with the downlink signal; or
indication information of the downlink signal, where the indication information is used for indicating an information item carried by the downlink signal.

Optionally, that the working area performs some functions of the cell includes at least one of the following:
receiving a paging message;
performing selection or re-selection between working areas;
camping on the working area; or
measuring the working area.

Optionally, step 302 includes:
receiving, according to the second configuration information, an uplink signal transmitted by a terminal.

Optionally, step 302 includes:
transmitting the downlink signal according to the third configuration information.

Optionally, the transmitting the downlink signal according to the third configuration information includes:
transmitting, in a case that an uplink signal is received, a paging message in a working area of the uplink signal and/or transmitting a paging message on a target resource, where the target resource is a transmission resource of the downlink signal.

It should be learned that the method is implemented in cooperation with the foregoing transmission processing method that is applied to a terminal. An implementation of the network side device in the foregoing method embodiment is applied to the method, and the same technical effect can also be achieved.

It should be noted that the transmission processing method provided in this embodiment of this application may be performed by a transmission processing apparatus, or may be performed by a control module in the transmission processing apparatus and configured to perform and load the transmission processing method. In this embodiment of this application, an example in which the transmission processing method is performed and loaded by the transmission processing apparatus is used to describe the transmission processing method provided in this embodiment of this application.

As shown in FIG. 4, an embodiment of this application further provides a transmission processing apparatus, including:
a receiving module 410, configured to receive first configuration information transmitted by a network side device, where the first configuration information is used for configuring a working area for signal transmission, and the working area is used for performing some functions of a cell; and
a first signal transmission module 420, configured to perform signal transmission in the working area according to the first configuration information.

Optionally, the first configuration information includes at least one of the following:
second configuration information, where the second configuration information is used for configuring an uplink signal of the working area;
third configuration information, where the third configuration information is used for configuring a downlink signal of the working area;
an identifier of the working area; or
frequency point information of the working area.

Optionally, the second configuration information includes at least one of the following:
a type of the uplink signal;
frequency point information of the uplink signal;
time domain position information of the uplink signal;
a subcarrier spacing of the uplink signal;
a target downlink signal associated with the uplink signal; or
indication information of the uplink signal, where the indication information is used for indicating an information item carried by the uplink signal.

Optionally, the third configuration information includes at least one of the following:
a type of the downlink signal;
an identifier of the downlink signal;
frequency point information of the downlink signal;
time domain position information of the downlink signal;
a subcarrier spacing of the downlink signal;
a target uplink signal associated with the downlink signal; or
indication information of the downlink signal, where the indication information is used for indicating an information item carried by the downlink signal.

Optionally, that the working area performs some functions of the cell includes at least one of the following:
receiving a paging message;
performing selection or re-selection between working areas;
camping on the working area; or
measuring the working area.

Optionally, the first signal transmission module includes:
an uplink signal transmitting submodule, configured to transmit an uplink signal in the working area according to the second configuration information.

Optionally, the uplink signal transmitting submodule is further configured to:
transmit the uplink signal in the working area according to the second configuration information in a case that it is detected that a target event occurs, where
the target event includes at least one of the following:
   the second configuration information having been received;
   the terminal working in the working area
   transmitted indication information having been received;
   a measurement result of a target signal meeting a preset condition;
   the working area changing; or
   a working mode changing.

Optionally, a type of the measurement result includes at least one of the following:
reference signal received power;
reference signal received quality;
a signal to interference and noise ratio;
a received signal strength indicator;
a channel occupancy rate; or
a channel occupancy time.

Optionally, the uplink signal transmitting submodule is further configured to perform at least one of the following:
transmit the uplink signal carrying a terminal identifier and/or a working area identifier in a case that the second configuration information includes the indication information of the uplink signal;
transmit the uplink signal according to the detected target downlink signal and based on uplink signal transmission configuration corresponding to the target downlink signal in a case that the second configuration information includes the target downlink signal associated with the uplink signal;
transmit the uplink signal based on a target uplink timing advance, where the target uplink timing advance is configured, pre-configured, or pre-defined by a network side, or is determined according to a path loss of downlink measurement; or
transmit the uplink signal through a source working area in a case that the working area changes.

Optionally, a time domain position of the target downlink signal is a time domain position corresponding to the target uplink timing advance.

Optionally, the first signal transmission module includes:
a downlink signal receiving submodule, configured to receive the downlink signal in the working area according to the third configuration information.

Optionally, the downlink signal transmission submodule is further configured to perform at least one of the following:
receive the downlink signal in a working area in which the target uplink signal is transmitted in a case that the third configuration information includes the target uplink signal associated with the downlink signal; or
receive the downlink signal on a target resource according to the third configuration information, where the target resource is a transmission resource of the downlink signal.

Optionally, the downlink signal includes at least a paging message.

Optionally, the apparatus further includes:
a processing module, configured to stop downlink measurement in the working area according to the first configuration information.

After receiving the first configuration information transmitted by the network side device, the apparatus can perform signal transmission in the working area according to the first configuration information. The first configuration information is used for configuring the working area for signal transmission, and the working area is used for performing some functions of the cell. Therefore, even if the terminal moves between cells, some functions of the cell may no longer be performed in the working area due to configuration of the working area, thereby achieving the purpose of reducing power consumption.

The transmission processing apparatus in this embodiment of this application may be an apparatus, or may be a component, an integrated circuit, or a chip in a terminal. The apparatus may be a mobile electronic device or may be a non-mobile electronic device. For example, the mobile electronic device may be a mobile phone, a tablet personal computer, a notebook computer, a handheld computer, an in-vehicle electronic device, a wearable device, an ultra-mobile personal computer (ultra-mobile personal computer, UMPC), a netbook, a personal digital assistant (personal digital assistant, PDA), or the like; and the non-mobile electronic device may be a server, a network attached storage (Network Attached Storage, NAS), a personal computer (personal computer, PC), a television (television, TV), a teller machine, a self-service machine, or the like. This is not specifically limited in this embodiment of this application.

The transmission processing apparatus in this embodiment of this application may be an apparatus having an operating system. The operating system may be an Android (Android) operating system, or may be an ios operating system, or may be another possible operating system. This is not specifically limited in this embodiment of this application.

The transmission processing apparatus provided in this embodiment of this application can implement all processes implemented by the terminal in the method embodiment of FIG. 2. To avoid repetition, details are not described herein again.

As shown in FIG. 5, an embodiment of this application further provides a transmission processing apparatus, including:
a transmitting module 510, configured to transmit first configuration information, where the first configuration information is used for configuring a working area for signal transmission, and the working area is used for performing some functions of a cell; and
a second signal transmission module 520, configured to perform signal transmission in the working area according to the first configuration information.

Optionally, the first configuration information includes at least one of the following:
second configuration information, where the second configuration information is used for configuring an uplink signal of the working area;
third configuration information, where the third configuration information is used for configuring a downlink signal of the working area;
an identifier of the working area; or
frequency point information of the working area.

Optionally, the second configuration information includes at least one of the following:
a type of the uplink signal;
frequency point information of the uplink signal;
time domain position information of the uplink signal;
a subcarrier spacing of the uplink signal;
a target downlink signal associated with the uplink signal; or
indication information of the uplink signal, where the indication information is used for indicating an information item carried by the uplink signal.

Optionally, the third configuration information includes at least one of the following:
a type of the downlink signal;
an identifier of the downlink signal;
frequency point information of the downlink signal;
time domain position information of the downlink signal;
a subcarrier spacing of the downlink signal;
a target uplink signal associated with the downlink signal; or
indication information of the downlink signal, where the indication information is used for indicating an information item carried by the downlink signal.

Optionally, that the working area performs some functions of the cell includes at least one of the following:
receiving a paging message;
performing selection or re-selection between working areas;
camping on the working area; or
measuring the working area.

Optionally, the second signal transmission module includes:
an uplink signal receiving submodule, configured to receive, according to the second configuration information, an uplink signal transmitted by a terminal.

Optionally, the second signal transmission module includes:
a downlink signal transmitting submodule, configured to transmit the downlink signal according to the third configuration information.

Optionally, the downlink signal transmitting submodule is further configured to:
transmit, in a case that an uplink signal is received, a paging message in a working area of the uplink signal and/or transmit a paging message on a target resource, where the target resource is a transmission resource of the downlink signal.

The transmission processing apparatus provided in this embodiment of this application can implement all processes implemented by the network side device in the method embodiment of FIG. 3. To avoid repetition, details are not described herein again.

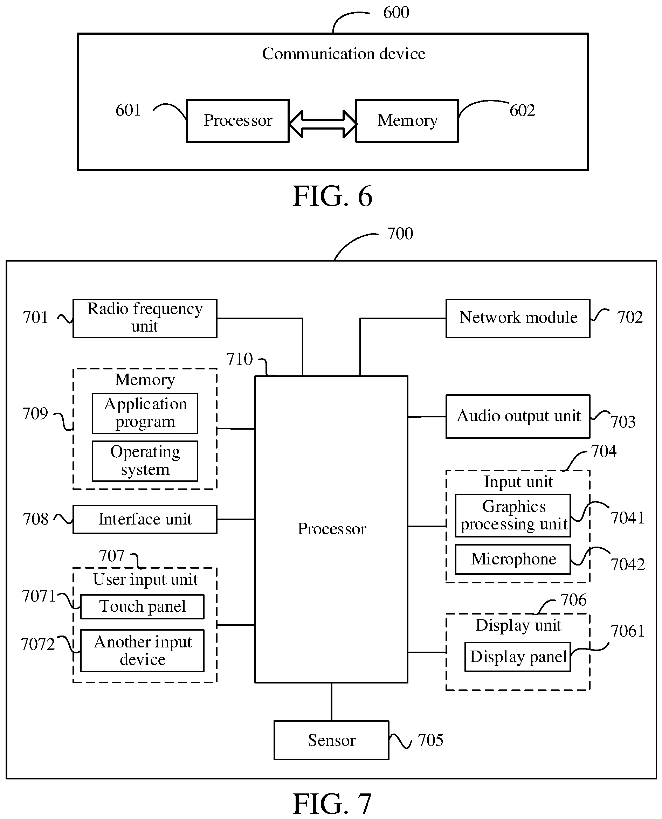

Optionally, as shown in FIG. 6, an embodiment of this application further provides a communication device, including a processor 601, a memory 602, and a program or an instruction stored in the memory 602 and executable on the processor 601. For example, in a case that the communication device 600 is a terminal, the program or the instruction, when executed by the processor 601, implements all processes of the foregoing transmission processing method embodiment, and the same technical effect can be achieved. In a case that the communication device 600 is a network side device, the program or the instruction, when executed by the processor 601, implements all processes of the foregoing transmission processing method embodiment, and the same technical effect can be achieved. To avoid repetition, details are not described herein again.

FIG. 7 is a schematic diagram of a hardware structure of a terminal according to various embodiments of this application.

The terminal 700 includes, but is not limited to, components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (such as a battery) for supplying power to the components. The power supply may be logically connected to the processor 710 by using a power supply management system, thereby implementing functions, such as charging, discharging, and power consumption management, by using the power supply management system. A terminal structure shown in FIG. 7 does not constitute a limitation to the terminal, and the terminal may include more or fewer components than those shown in the figure, or some components may be combined, or a different component deployment may be used. Details are not described herein again.

It should be understood that, in this embodiment of this application, the input unit 704 may include a graphics processing unit (Graphics Processing Unit, GPU) 7041 and a microphone 7042. The graphics processing unit 7041 performs processing on image data of a static picture or a video that is obtained by an image acquisition apparatus (for example, a camera) in a video acquisition mode or an image acquisition mode. The display unit 706 may include a display panel 7061. The display panel 7061 may be configured in a form such as a liquid crystal display or an organic light-emitting diode. The user input unit 707 includes a touch panel 7071 and another input device 7072. The touch panel 7071 is also referred to as a touch screen. The touch panel 7071 may include two parts: a touch detection apparatus and a touch controller. The another input device 7072 may include, but is not limited to, a physical keyboard, a functional key (such as a volume control key or a switch key), a track ball, a mouse, and a joystick, and details are not described herein again.

In this embodiment of this application, the radio frequency unit 701 receives downlink data from a network side device and transmits the downlink data to the processor 710 for processing, and transmits uplink data to the network side device. Generally, the radio frequency unit 701 includes, but is not limited to, an antenna, at least one amplifier, a transceiver, a coupler, a low noise amplifier, a duplexer, and the like.

The memory 709 may be configured to store a software program or an instruction and various data. The memory 709 may mainly include a program or instruction storage region and a data storage region. The program or instruction storage region may store an operating system, an application program or instruction required by at least one function (such as a sound playback function and an image playback function), or the like. In addition, the memory 709 may include a high speed random access memory, and may also include a non-volatile memory. The nonvolatile memory may be a read-only memory (read-only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, the memory may include at least one magnetic disk storage device, a flash memory device, or another non-volatile solid-state storage device.

The processor 710 may include one or more processing units. Optionally, the processor 710 may integrate an application processor and a modem processor. The application processor mainly processes an operating system, a user interface, an application program, an instruction, or the like. The modem processor mainly processes wireless communication such as a baseband processor. It can be understood that the foregoing modem processor may not be integrated into the processor 710.

The radio frequency unit 701 is configured to receive first configuration information transmitted by a network side device, where the first configuration information is used for configuring a working area for signal transmission, and the working area is used for performing some functions of a cell.

The processor 710 is configured to perform signal transmission in the working area according to the first configuration information.

After receiving the first configuration information transmitted by the network side device, the terminal can perform signal transmission in the working area according to the first configuration information. The first configuration information is used for configuring the working area for signal transmission, and the working area is used for performing some functions of the cell. Therefore, even if the terminal moves between cells, some functions of the cell may no longer be performed in the working area due to configuration of the working area, thereby achieving the purpose of reducing power consumption.

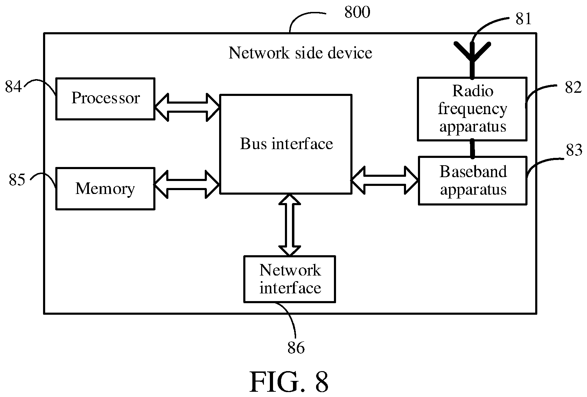

Specifically, an embodiment of this application further provides a network side device. As shown in FIG. 8, the network device 800 includes: an antenna 81, a radio frequency apparatus 82, and a baseband apparatus 83. The antenna 81 is connected to the radio frequency apparatus 82. In an uplink direction, the radio frequency apparatus 82 receives information through the antenna 81, and transmits the received information to the baseband apparatus 83 for processing. In a downlink direction, the baseband apparatus 83 processes to-be-transmitted information and transmits the to-be-transmitted information to the radio frequency apparatus 82. The radio frequency apparatus 82 processes the received information and transmits the received information out through the antenna 81.

The foregoing frequency band processing apparatus may be located in the baseband apparatus 83. The method performed by the network side device in the foregoing embodiments may be implemented in the baseband apparatus 83, and the baseband apparatus 83 includes a processor 84 and a memory 85.

The baseband apparatus 83 may include, for example, at least one baseband board on which a plurality of chips are arranged. As shown in FIG. 8, one of the chips is, for example, the processor 84 and is connected to the memory 85, to invoke a program in the memory 85 to perform operations by the network device shown in the foregoing method embodiments.

The baseband apparatus 83 may further include a network interface 86, configured to exchange information with the radio frequency apparatus 82. The interface is, for example, a common public radio interface (common public radio interface, CPRI for short).

Specifically, the network side device in this embodiment of this application further includes an instruction or a program stored in the memory 85 and executable on the processor 84. The processor 84 invokes the instruction or the program in the memory 85 to perform the method performed by the modules shown in FIG. 6, and the same technical effect can be achieved. To avoid repetition, details are not described herein again.

An embodiment of this application further provides a readable storage medium, storing a program or an instruction. The program or the instruction, when executed by a processor, implements all processes of the embodiments of the foregoing transmission processing method, and the same technical effect can be achieved. To avoid repetition, details are not described herein again.

The processor is the processor in the electronic device described in the foregoing embodiments. The readable storage medium includes a computer-readable storage medium, for example, a computer read-only memory (Read-Only Memory, ROM for short), a random access memory (Random Access Memory, RAM for short), a magnetic disk, an optical disc, or the like.

An embodiment of this application further provides a chip, including a processor and a communication interface, where the communication interface is coupled to the processor, and the processor is configured to run a program or an instruction, to implement all processes of the embodiments of the foregoing transmission processing method, and the same technical effect can be achieved. To avoid repetition, details are not described herein again.

It should be understood that, the chip mentioned in this embodiment of this application may also be referred to as a system-level chip, a system chip, a chip system, a system on chip, or the like.

It should be noted that the term " include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the process, method, object, or apparatus. In addition, it should be noted that within the scope of the method and apparatus in the implementations of this application, functions are not limited to be performed in an order shown or discussed, and may be performed according to the involved functions in a substantially simultaneous manner or in a reverse order. For example, the described method may be performed in an order different from the described order, and various steps may be added, omitted, or combined. In addition, features described with reference to some examples may also be combined in other examples.

Through the descriptions of the foregoing implementations, a person skilled in the art may clearly understand that the method according to the foregoing embodiments may be implemented by using software in combination with a necessary general hardware platform, and certainly, may alternatively be implemented by using hardware. However, in many cases, the former manner is a better implementation. Based on such an understanding, the technical solutions of this application essentially or the part contributing to the related art may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application have been described above with reference to the accompanying drawings. However, this application is not limited to the specific embodiments described above, and the specific embodiments described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A transmission processing method, applied to a terminal and comprising:
receiving first configuration information transmitted by a network side device, wherein the first configuration information is used for configuring a working area for signal transmission, and the working area is used for performing some functions of a cell; and
performing signal transmission in the working area according to the first configuration information.

2. The method according to claim 1, wherein the first configuration information comprises at least one of following:
second configuration information, wherein the second configuration information is used for configuring an uplink signal of the working area;
third configuration information, wherein the third configuration information is used for configuring a downlink signal of the working area;
an identifier of the working area; or
frequency point information of the working area.

3. The method according to claim 2, wherein the second configuration information comprises at least one of following:
a type of the uplink signal;
frequency point information of the uplink signal;
time domain position information of the uplink signal;
a subcarrier spacing of the uplink signal;
a target downlink signal associated with the uplink signal; or
indication information of the uplink signal, wherein the indication information is used for indicating an information item carried by the uplink signal.

4. The method according to claim 2, wherein the third configuration information comprises at least one of following:
a type of the downlink signal;
an identifier of the downlink signal;
frequency point information of the downlink signal;
time domain position information of the downlink signal;
a subcarrier spacing of the downlink signal;
a target uplink signal associated with the downlink signal; or
indication information of the downlink signal, wherein the indication information is used for indicating an information item carried by the downlink signal.

5. The method according to claim 1, wherein that the working area performs some functions of the cell comprises at least one of following:
receiving a paging message;
performing selection or re-selection between working areas;
camping on the working area; or
measuring the working area;

6. The method according to claim 3, wherein the performing signal transmission in the working area according to the first configuration information comprises:
transmitting an uplink signal in the working area according to the second configuration information.

7. The method according to claim 6, wherein the transmitting the uplink signal in the working area according to the second configuration information comprises:
transmitting the uplink signal in the working area according to the second configuration information in a case that it is detected that a target event occurs, wherein
the target event comprises at least one of following:
the second configuration information having been received;
the terminal working in the working area
transmitted indication information having been received;
a measurement result of a target signal meeting a preset condition;
the working area changing; or
a working mode changing.

8. The method according to claim 7, wherein a type of the measurement result comprises at least one of following:
reference signal received power;
reference signal received quality;
a signal to interference and noise ratio;
a received signal strength indicator;
a channel occupancy rate; or
a channel occupancy time.

9. The method according to claim 6, wherein the transmitting the uplink signal in the working area according to the second configuration information comprises at least one of following:
transmitting the uplink signal carrying a terminal identifier and/or a working area identifier in a case that the second configuration information comprises the indication information of the uplink signal;
transmitting the uplink signal according to a detected target downlink signal and based on uplink signal transmission configuration corresponding to the target downlink signal in a case that the second configuration information comprises the target downlink signal associated with the uplink signal;
transmitting the uplink signal based on a target uplink timing advance, wherein the target uplink timing advance is configured, pre-configured, or pre-defined by a network side, or is determined according to a path loss of downlink measurement; or
transmitting the uplink signal through a source working area in a case that the working area changes.

10. The method according to claim 9, wherein a time domain position of the target downlink signal is a time domain position corresponding to the target uplink timing advance.

11. The method according to claim 4, wherein the performing signal transmission in the working area according to the first configuration information comprises:
receiving the downlink signal in the working area according to the third configuration information.

12. The method according to claim 11, wherein the receiving the downlink signal in the working area according to the third configuration information comprises at least one of following:
receiving the downlink signal in a working area in which the target uplink signal is transmitted in a case that the third configuration information comprises the target uplink signal associated with the downlink signal; or
receiving the downlink signal on a target resource according to the third configuration information, wherein the target resource is a transmission resource of the downlink signal.

13. The method according to claim 12, wherein the downlink signal comprises at least a paging message.

14. The method according to claim 1, further comprising:
stopping downlink measurement in the working area according to the first configuration information.

15. A transmission processing method, applied to a network side device and comprising:
transmitting first configuration information, wherein the first configuration information is used for configuring a working area for signal transmission, and the working area is used for performing some functions of a cell; and
performing signal transmission in the working area according to the first configuration information.

16. The method according to claim 15, wherein the first configuration information comprises at least one of following:
second configuration information, wherein the second configuration information is used for configuring an uplink signal of the working area;
third configuration information, wherein the third configuration information is used for configuring a downlink signal of the working area;
an identifier of the working area; or
frequency point information of the working area.

17. The method according to claim 16, wherein the second configuration information comprises at least one of following:
a type of the uplink signal;
frequency point information of the uplink signal;
time domain position information of the uplink signal;
a subcarrier spacing of the uplink signal;
a target downlink signal associated with the uplink signal; or
indication information of the uplink signal, wherein the indication information is used for indicating an information item carried by the uplink signal.

18. The method according to claim 16, wherein the third configuration information comprises at least one of following:
a type of the downlink signal;
an identifier of the downlink signal;
frequency point information of the downlink signal;
time domain position information of the downlink signal;
a subcarrier spacing of the downlink signal;
a target uplink signal associated with the downlink signal; or
indication information of the downlink signal, wherein the indication information is used for indicating an information item carried by the downlink signal.

19. The method according to claim 15, wherein that the working area performs some functions of the cell comprises at least one of following:
receiving a paging message;
performing selection or re-selection between working areas;
camping on the working area; or
measuring the working area;

20. The method according to claim 16, wherein the performing signal transmission in the working area according to the first configuration information comprises:
receiving, according to the second configuration information, an uplink signal transmitted by a terminal.

21. The method according to claim 16, wherein the performing signal transmission in the working area according to the first configuration information comprises:
transmitting the downlink signal according to the third configuration information.

22. The method according to claim 21, wherein the transmitting the downlink signal according to the third configuration information comprises:
transmitting, in a case that an uplink signal is received, a paging message in a working area of the uplink signal and/or transmitting a paging message on a target resource, wherein the target resource is a transmission resource of the downlink signal.

23. A transmission processing apparatus, comprising:
a receiving module, configured to receive first configuration information transmitted by a network side device, wherein the first configuration information is used for configuring a working area for signal transmission, and the working area is used for performing some functions of a cell; and
a first signal transmission module, configured to perform signal transmission in the working area according to the first configuration information.

24. The apparatus according to claim 23, wherein the first configuration information comprises at least one of following:
second configuration information, wherein the second configuration information is used for configuring an uplink signal of the working area;
third configuration information, wherein the third configuration information is used for configuring a downlink signal of the working area;
an identifier of the working area; or
frequency point information of the working area.

25. The apparatus according to claim 24, wherein the second configuration information comprises at least one of following:
a type of the uplink signal;
frequency point information of the uplink signal;
time domain position information of the uplink signal;
a subcarrier spacing of the uplink signal;
a target downlink signal associated with the uplink signal; or
indication information of the uplink signal, wherein the indication information is used for indicating an information item carried by the uplink signal.

26. The apparatus according to claim 24, wherein the third configuration information comprises at least one of following:
a type of the downlink signal;
an identifier of the downlink signal;
frequency point information of the downlink signal;
time domain position information of the downlink signal;
a subcarrier spacing of the downlink signal;
a target uplink signal associated with the downlink signal; or
indication information of the downlink signal, wherein the indication information is used for indicating an information item carried by the downlink signal.

27. The apparatus according to claim 23, wherein that the working area performs some functions of the cell comprises at least one of following:
receiving a paging message;
performing selection or re-selection between working areas;
camping on the working area; or
measuring the working area;

28. The apparatus according to claim 23, wherein the first signal transmission module comprises:
an uplink signal transmitting submodule, configured to transmit an uplink signal in the working area according to a second configuration information.

29. The apparatus according to claim 28, wherein the uplink signal transmitting submodule is further configured to:
transmit the uplink signal in the working area according to the second configuration information in a case that it is detected that a target event occurs, wherein
the target event comprises at least one of following:
the second configuration information having been received;
the terminal working in the working area
transmitted indication information having been received;
a measurement result of a target signal meeting a preset condition;
the working area changing; or
a working mode changing.

30. A transmission processing apparatus, comprising:
a transmitting module, configured to transmit first configuration information, wherein the first configuration information is used for configuring a working area for signal transmission, and the working area is used for performing some functions of a cell; and
a second signal transmission module, configured to perform signal transmission in the working area according to the first configuration information.

31. The apparatus according to claim 30, wherein the first configuration information comprises at least one of following:
second configuration information, wherein the second configuration information is used for configuring an uplink signal of the working area;
third configuration information, wherein the third configuration information is used for configuring a downlink signal of the working area;
an identifier of the working area; or
frequency point information of the working area.

32. The apparatus according to claim 32, wherein the second configuration information comprises at least one of following:
a type of the uplink signal;
frequency point information of the uplink signal;
time domain position information of the uplink signal;
a subcarrier spacing of the uplink signal;
a target downlink signal associated with the uplink signal; or
indication information of the uplink signal, wherein the indication information is used for indicating an information item carried by the uplink signal.

33. The apparatus according to claim 32, wherein the third configuration information comprises at least one of following:
a type of the downlink signal;
an identifier of the downlink signal;
frequency point information of the downlink signal;
time domain position information of the downlink signal;
a subcarrier spacing of the downlink signal;
a target uplink signal associated with the downlink signal; or
indication information of the downlink signal, wherein the indication information is used for indicating an information item carried by the downlink signal.

34. The apparatus according to 30, wherein that the working area performs some functions of the cell comprises at least one of following:
receiving a paging message;
performing selection or re-selection between working areas;
camping on the working area; or
measuring the working area.

35. The apparatus according to claim 31, wherein the second signal transmission module comprises:
an uplink signal receiving submodule, configured to receive, according to the second configuration information, an uplink signal transmitted by a terminal.

36. The apparatus according to claim 31, wherein the second signal transmission module comprises:
a downlink signal transmitting submodule, configured to transmit the downlink signal according to the third configuration information.

37. A communication device, comprising a processor, a memory, and a program or an instruction stored in the memory and executable on the processor, the program or the instruction, when executed by the processor, implementing the transmission processing method according to any one of claims 1 to 14, or implementing steps of the transmission processing method according to any one of claims 15 to 22.

38. A readable storage medium, storing a program or an instruction, the program or the instruction, when executed by a processor, implementing the transmission processing method according to any one of claims 1 to 14, or implementing steps of the transmission processing method according to any one of claims 15 to 22.
